# EUROPEAN PATENT APPLICATION

(11) **EP 4 467 627 A1**
(43) Date of publication of application: **27.11.2024**
(21) Application number: 23305821.3
(22) Date of filing: 23.05.2023
(51) Int. Cl.: C09J 189/00, C08G 73/02

(54) **ADHESIVE COMPOSITION FOR THE MANUFACTURE OF LIGNOCELLULOSIC FIBRE-BASED COMPOSITES**

(71) Applicant: EVERTREE, 60280 Venette (FR)
(72) Inventor: The designation of the inventor has not yet been filed
(74) Representative: Santarelli

(57) **Abstract**

The invention relates to the use of an adhesive composition comprising (i) ground pea seeds comprising between 5 wt% and 40 wt% of crude proteins on the total weight of the ground pea seeds, (ii) an amine-based azetidinium-functional cross-linker, and (iii) water, said adhesive composition having a viscosity at 20°C of less than 1200 mPa.s, for manufacturing a lignocellulosic fibre-based composite.

## Description

### Field of the Invention

The present invention relates to a process for the manufacture of a lignocellulosic fibre-based composite comprising the use of an aqueous adhesive composition comprising ground pea seeds and an amine-based azetidinium-functional cross-linker.

### Background of the Invention

Medium-Density Fibreboard (MDF), and other types of fibreboards such as High Density Fibreboard (HDF), Low Density Fibreboard (LDF) and Ultra-Low Density Fibreboard (ULDF) are typically obtained from a lignocellulosic material comprising lignocellulosic fibres, in particular wood, according to a process that may be summed up as follows. The first step in the fibreboard (*e.g.*, MDF, HDF, LDF or ULDF) manufacturing process is wood handling which typically includes debarking, log breaking into chips and chip/bark handling systems. In this step, wood chips are separated from stones and other contaminations. The next step is the fibre preparation, which may include processing the wood chips in a chip washer, a steaming bin, a preheater and a defibrating apparatus such as a refiner or defibrator. In the steaming bin, wood chips are heated by steam to a temperature around 80-95°C, and they are then conveyed by a plugscrew that squeezes water out of the chips before they enter the pre-heater. In the preheater the chips are heated to a temperature of around 160°C which makes the fibres soft and easier to separate. The softened chips are then transported and introduced (usually through a screw) into the defibrator, where they are ground into fibres between two metal members (*e.g*., discs or plates) under a steam pressure up to 8 bar. The fibres flow with the steam out of the refiner into a so-called blow line where wood fibres are resinated, *i.e.* sprayed with a thermoset resin. The obtained fibres are dried with for example one or two dryer cyclones and a Z-Sifter. In the cyclones the fibres are dried with hot flue gas or steam to attain 5%-10% moisture content. The Z-Sifter cleans the fibres of contaminates before the forming stage. During the forming stage the resinated fibres are formed into a mat, which enters a cold pre-press before it goes into a hot press. The last stage is handling, where the fibreboards are cut to the desired dimensions, cooled down, and stacked before delivery.

Such a process and the industrial equipment that can be used to perform it are described for example in: Wood-Based Panels - An Introduction for Specialists, COST Office, 2010, Published by Brunel University Press, ISBN 978-1-902316-82-6*,* and by Halvarsson, S., Manufacture of straw MDF and fibreboard, Thesis for the degree of Doctor of technology, Sundsvall, 2010*.*

Usually, these wood fibre-based composites are manufactured using a urea formaldehyde resin, a melamine urea formaldehyde resin, a phenol formaldehyde resin, or a polymeric methylenediphenyl diisocyanate resin. These resins are made from petroleum feedstock.

The development of biobased wood adhesives for reducing the dependence on fossil resources, without compromising the performances, has become a need due to more stringent environmental and human health safety regulations.

In some of the known processes for manufacturing a fibre-based composite, protein raw material such as soy is used. More particularly, protein sources, such as soy protein isolate or soy flour, are used in combination with a curing agent.

US6306997 discloses a soybean-based adhesive resin comprising soybean flour and a phenol formaldehyde resin, and a method of making this adhesive. This method involves providing an aqueous solution of soybean flour (dispersion of flour in an aqueous liquid, typically water) and adding a cross-linking agent to the solution under conditions effective to cross-link the soybean flour so that an adhesive resin is formed. This adhesive can be used for the manufacture of fibreboards. More generally, there is disclosed a composite product which includes particulate plant material and the soybean-based adhesive resin.

Since the adhesives are usually sprayed on wood fibres during the manufacturing process of fibreboards, it is required they have a low viscosity (usually less than 1200 mPa.s). However, manufacturing processes that use an aqueous solution with a protein plant powder or flour may lead to viscosity issues of the adhesive.

Diluting the adhesive to a low viscosity with more water is a limited option because adding too much water can cause steam to blow up during pressing, or it can take a longer pressing time to remove excess water.

Different ways have been explored to reduce the viscosity of protein-based aqueous adhesives. For example, International application WO2009/048598 discloses an adhesive for lignocellulosic composite, comprising an aqueous mixture of protein (in particular soy protein), a polyamidoamine-epichlorohydrin (PAE) resin, and a non-urea diluent that is a low volatility water-soluble compound that provides low viscosity in water (such as glycerol). International application WO2012/112734 further specifies to lower the pH of such an adhesive composition to less than 5. International application WO2010/028062 discloses an adhesive composition comprising a protein component (in particular soy protein), an azetidinium-functionalized polymer, and one or more viscosity-modifying components consisting of sulfite reducing agents or thiols.

It is also known patent application CN102719217A that discloses a protein-based wood adhesive comprising protein-containing raw materials (such as soy proteins or pea protein powder), a polyamidoamine-epichlorohydrin (PAE) resin, modifiers (such as polyvinyl alcohol, urea or isocyanate) and an acid compound. This acidic aqueous adhesive has a high viscosity and is particularly useful for gluing plywood, even if its use for gluing MDF is also contemplated but not exemplified.

Therefore, there is a need for improving processability of eco-friendly protein-based adhesive compositions, by decreasing its viscosity, without compromising the final properties of the article made therefrom. There is also need for improving processability of these adhesive compositions without decreasing the solid content.

The inventors have surprisingly found that using ground pea seeds in an adhesive composition improves the processability of the resulting adhesive composition, while allowing maintaining a high solid content in the adhesive composition.

Furthermore, the inventors have surprisingly found that an aqueous adhesive composition comprising a combination of ground pea seeds with an amine-based azetidinium-functional cross-linker makes it possible to obtain lignocellulosic fibre-based composites (*e.g*., MDF, HDF, LDF or ULDF) having excellent adhesive properties.

### Invention summary

The invention relates to the use of an adhesive composition comprising ground pea seeds comprising between 5 wt% and 40 wt% of crude proteins on the total weight of the ground pea seeds, an amine-based azetidinium-functional cross-linker, and water, said adhesive composition having a viscosity at 20°C of less than 1200 mPa.s, preferably comprised between 200 and 1000 mPa.s, in particular between 500 and 900 mPa.s, for bonding lignocellulosic fibres, preferably wood fibres.

Advantageously this adhesive composition is used for manufacturing a lignocellulosic fibre-based composites, such as fibreboards.

By "ground pea seeds", it is meant whole, dehulled or split pea seeds, which can be dehulled or partially dehulled, and have been ground into powder. Said seeds have not been submitted to any further transformation steps such as an extraction, a fractionation and/or a grafting step(s). Preferably, the seeds have not been submitted to heat treatment at a temperature of at least 135°C, more preferably, at least 110°C, even more preferably, at least 80°C.

As an example of an extraction step, no fat, no starch, no protein extraction is performed. Therefore, ground pea seeds are not pea starch isolate, pea protein isolate (containing more than 80 wt% protein on the total weight of the isolate), pea starch concentrate or pea protein concentrate (containing between 50 wt% and 80 wt% protein on the total weight of the concentrate).

Using these ground pea seeds has the advantage of simplifying the preparation of an adhesive composition, since no extraction or fractionation of the pea seed is necessary such as to obtain, for example, starch or protein concentrates or isolates, which have previously been described for preparing bio-based adhesive compositions. Furthermore, an adhesive composition used in the invention can be provided without having to modify the ground pea seeds, for example by an additional grafting step. Therefore, the production costs to prepare an adhesive composition used in the invention are reduced.

In addition, the ground pea seeds have the further advantage of having a lighter color (light yellow) than meals obtained from certain oleaginous plants (brown) such as sunflower seed meals or rapeseed meals, which will not affect the color of the final product.

Preferably, the ground pea seeds implemented in the adhesive composition used in the present invention belong to the genus *Pisum* and/or *Lathyrus.* More preferably, the seeds belong to the genus *Pisum.*

Preferably, the seeds belong to the species *Pisum sativum* and/or *Lathyrus aphaca,* more preferably, *Pisum sativum* (such as *Pisum sativum* L. known as yellow pea).

Advantageously, the ground pea seeds are micronized and optionally sieved pea seeds.

By "micronized", it is meant that the seeds have been ground to a particle size (Dv50) of at most 1000 µm.

Micronization can be carried out using a pin mill, an attrition mill, an impact mill or a hammer mill.

Advantageously, micronization is followed by a sieving step to obtain the desired particle size of the ground pea seeds.

Preferably, the ground pea seeds have a granulometry Dv50 comprised between 1 µm and 1000 µm, more preferably, between 1 µm and 500 µm, even more preferably, between 1 µm and 200 µm, most preferably, between 20 µm and 90 µm, for example about 25 µm.

It will be noted that in the context of the present application, and unless otherwise stipulated, the ranges of values indicated are understood to be inclusive.

By "about" a value, it is meant said value plus or minus 10%.

Preferably, the ground pea seeds have a granulometry Dv90 comprised between 10 µm and 1500 µm, more preferably, between 25 µm and 500 µm, even more preferably, between 50 µm and 150 µm, for example about 77 µm.

In a preferred embodiment, the ground pea seeds have a granulometry Dv50 comprised between 1 µm and 200 µm, preferably, between 20 µm and 90 µm, and a granulometry Dv90 comprised between 25 µm and 500 µm, preferably, between 50 µm and 150 µm.

The granulometry Dv50 and Dv90 are well-known by the skilled person respectively as the maximum size of 50%, or 90%, of the smallest particles in volume, and can be measured with a granulometer, for example according to the method described in Example 1 "Particle size determination".

Advantageously, the ground pea seeds comprise between 10 wt% and 30 wt% of crude protein, preferably, between 20 wt% and 30 wt%, such as between 15 wt% and 25 wt%, on the total weight of the ground pea seeds.

The crude protein content of the ground pea seeds can be measured following the Kjeldahl procedure (NF EN ISO 5983-2: 2009) with a nitrogen-to-protein conversion factor of 6.25.

Advantageously, the ground pea seeds comprise between 0.1 wt% and 20 wt% of oil, preferably, between 0.5 wt% and 12 wt%, more preferably, between 0.7 wt% and 5 wt% even more preferably, between 1.0 wt% and 2.0 wt%, on the total weight of the ground pea seeds.

The oil content of the ground pea seeds can be measured following the procedure as set forth in Example 1, i.e. by extracting oil with a Soxhlet extractor using n-hexane as solvent, then, separating the hexane from oil by using a rotary evaporator at 68°C.

Advantageously, the ground pea seeds comprise between 30 wt% and 70 wt% of starch, preferably between 40 wt% and 60 wt% more preferably between 45 wt% and 55 wt%, on the total weight of the ground pea seeds.

The starch content of the ground pea seeds can be measured following the procedure as set forth in Example 1, i.e. after amylolysis and using HPAEC (High Performance Anion Exchange Chromatography with Pulsed Amperometric detection) Analyses.

Advantageously, the ground pea seeds have a water (moisture) content comprised between 1 wt% and 20 wt%, preferably between 1 wt% and 15 wt%, more preferably, between 3 wt% and 10 wt%, on the total weight of the ground pea seeds.

By "amine-based azetidinium-functional cross-linker", it is meant a cross-linker comprising amine and azetidinium groups.

By "cross-linker", it is meant a compound or mixture of compounds comprising reactive groups.

Advantageously, the amine-based azetidinium-functional cross-linker implemented in the adhesive composition used in the invention is a polyamidoamine-epichlorohydrin (PAE), a polyalkylenepolyamine-epichlorohydrin (PAPAE), an amine polymer-epichlorohydrin (APE), or a combination thereof.

More preferably, the amine-based azetidinium-functional cross-linker is a polyamidoamine-epichlorohydrin (PAE).

Advantageously, the adhesive composition used in the invention does not comprise a formaldehyde-based prepolymer.

By "formaldehyde-based prepolymer", it is meant a prepolymer or mixture of prepolymers obtained from at least one monomer being formaldehyde.

Preferably, the adhesive composition used in the invention does not comprise a urea-formaldehyde resin, a melamine-formaldehyde resin, a melamine urea-formaldehyde resin, a phenol-formaldehyde resin, a phenol-resorcinol-formaldehyde, or a combination thereof. More preferably, this adhesive composition does not comprise a urea-formaldehyde resin, a phenol-formaldehyde resin, or a combination thereof.

Advantageously, the adhesive composition used in the invention does not comprise polyacrylamide, polyvinyl alcohol, polyvinyl acetate, borax, ammonium thiosulfate, urea, isocyanate, or a mixture thereof.

Advantageously, the weight ratio of the ground pea seeds / amine-based azetidinium-functional cross-linker (dry weight / dry weight) is comprised between 0.5 and 30, preferably between 1 and 20, more preferably, between 1 and 10, even more preferably, between 3 and 6.

Advantageously, the adhesive composition used in the invention comprises between 5 wt% and 60 wt% of the ground pea seeds, based on the total weight of the adhesive composition, preferably, between 15 wt% and 50 wt%, more preferably, between 20 wt% and 40 wt%, based on the total weight of the adhesive composition.

Advantageously, the adhesive composition used in the invention comprises between 2 wt% and 12 wt% of the amine-based azetidinium-functional cross-linker, based on the total weight of the adhesive composition, preferably, between 5 wt% and 9 wt%, based on the total weight of the adhesive composition.

Advantageously, the adhesive composition used in the invention has a solid content of at least 20 wt%, preferably, at least 30 wt%, more preferably, at least 35 wt%, even more preferably, at least 40 wt%, based on the total weight of the adhesive composition.

By "solid content" of the adhesive composition, it is meant the percentage of dry solids contained in said composition. For example, if a composition is prepared by mixing ground pea seeds and water, the residual water already contained in the ground pea seeds (i.e., the water content of the ground pea seeds) is taken into consideration for calculating the solid content of the composition.

Advantageously, the adhesive composition used in the invention has a solid content comprised between 20 wt% and 70 wt%, preferably, comprised between 30 wt% and 70 wt%, more preferably, comprised between 40 wt% and 70 wt%, even more preferably, comprised between 50 wt% and 60 wt%, based on the total weight of the adhesive composition.

In a particular embodiment, the adhesive composition used in the invention further comprises a polyol.

Advantageously, this polyol is selected from the group consisting of glycerol (or crude vegetable glycerin), propylene glycol, ethylene glycol, alkyl and aryl derivatives of glycerol, alkyl and aryl derivatives of propylene glycol, alkyl and aryl derivatives of ethylene glycol, glucose, fructose, sorbitol, isosorbide, maltitol, mannitol, and erythritol, and/or from the group consisting of oligomers and polymers of any of the earlier listed monomers such as polyglycerols, polyethylene glycols (PEG), polypropylene glycols (PPG), glucose syrups, saccharose, molasse, maltodextrins, dextrins, and modified starches. Other non-volatile hydroxylated compounds may also be used.

Preferably, the polyol is a trifunctional alcohol (*i.e.*, a compound containing three hydroxyl groups). Preferably, any polyol present in the adhesive composition used in the invention is not of petroleum origin.

More preferably, the polyol present in the adhesive composition used in the invention is glycerol, distilled glycerin (advantageously having a glycerol content of about 99%) or crude vegetable glycerin (advantageously having a glycerol content of about 80%).

Even more preferably, the polyol present in the adhesive composition used in the invention is glycerol or crude vegetable glycerin (advantageously having a glycerol content of about 80%).

One benefit of using glycerol and various low-viscosity polyols is that they allow less water to be used in the adhesive composition. It allows to further increase the solid content of an adhesive composition. Reducing the amount of water, while retaining a low-viscosity adhesive composition, desirably reduces the risk that the composite formed therefrom is damaged by steam generated during formation of the composite at high temperature.

In this particular embodiment, the weight ratio of polyol / amine-based azetidinium-functional cross-linker (dry weight / dry weight) is advantageously comprised between 0.4 and 10, preferably, between 0.8 and 8, more preferably, between 1.5 and 6, even more preferably, between 3 and 5.

In this particular embodiment, the weight ratio of polyol / ground pea seeds (dry weight / dry weight) is advantageously comprised between 0.1 and 5, preferably, between 0.3 and 3, more preferably, between 0.5 and 2, even more preferably, between 0.7 and 1.2.

In this particular embodiment, the adhesive composition advantageously comprises between 5 wt% and 60 wt% of the polyol, preferably, between 10 wt% and 40 wt%, more preferably, between 15 wt% and 30 wt%, based on the total weight of the adhesive composition.

Advantageously, the pH of the adhesive composition is comprised between 3 and 12, preferably, between 5 and 11, more preferably, between 5 and 9. In particular, the pH of the adhesive composition is adjusted depending on the optimum pH of the amine-based azetidinium-functional cross-linker. In a preferred embodiment, the pH of the adhesive composition is more than 6, in particular comprised between 7 and 9. For example, the pH of an adhesive composition comprising PAE is preferably about 8.

The adhesive composition has a viscosity at 20°C of less than 1200 mPa.s, preferably, less than 1100 mPa.s, more preferably, less than 1000 mPa.s, even more preferably, less than 900 mPa.s, in particular comprised between 500 mPa.s and 900 mPa.s. This viscosity of the adhesive composition is obtained at pH 6, preferably at pH 9.

According to a preferred embodiment, the adhesive composition has the above-described viscosity and a solid content comprised between 20 wt% and 65 wt%, preferably, comprised between 40 wt% and 65 wt%, more preferably, comprised between 40 wt% and 60 wt%, even more preferably, comprised between 50 wt% and 60 wt%, based on the total weight of the adhesive composition.

The skilled person knows how to measure viscosity. Preferably, the viscosity can be measured as described in Example 2 (Rheological analysis).

Furthermore, all the viscosity measurements are done less than 15 min after stopping mixing the components of the adhesive composition.

In a particular embodiment, the adhesive composition used in the invention does not comprise any additional additive. In other words, the adhesive composition used in the invention consists of:
- ground pea seeds comprising between 5 wt% and 40 wt% of crude proteins on the total weight of the ground pea seeds,
- an amine-based azetidinium-functional cross-linker, and
- water,
and has a viscosity at 20°C of less than 1200 mPa.s, preferably comprised between 500 and 900 mPa.s.

Contrary to the term "comprising", it is understood that the terms "consisting of" exclude the presence of any other additional compound.

The adhesive composition used in the invention may further comprise at least one additive.

In particular, said at least one additive is selected from the group consisting of:
- fillers, preferably nanofillers, such as calcium carbonate, clay or nanoclay (e.g. montmorillonite, bentonite) such as those sold under the trade names CLOISITEO Na+, CLOISITE^{®}30B, CLOISITE^{®}20A, CLOISITE^{®}10A, natural biopolymers such as chitosan or cellulose, or metal such as silver, copper or gold,

- non-wood fibres, for example glass, carbon or aramid fibres,
- thickeners or texturizing agents, such as corn flour, wheat starch, olive kernel flour,
- gelling agents,
- surfactants such as siloxanes, anionic surfactants containing anionic functional groups such as alkyl sulfates (*e.g.*, sodium dodecyl sulfate), alkyl-ether sulfates (*e.g.*, sodium laureth sulfate), carboxylate salts (*e.g*., soaps), and phosphates (*e.g*., Alkyl ether phosphates)
- antioxidants such as polyphenols,
- antifoaming agents,
- antimicrobial agents such as oxidants, nisin,
- antibacterial agents such as nitrogen derivatives,
- fungicides such as sulphur-containing products,
- preservatives such as citric acid, paraben,
- pigments such as mineral pigments, *e.g.,* carbon black,
- agents improving moisture resistance or water-repellent agents such as wax,
- pH modulators such as a base (*e.g.,* NaOH) or an acid (*e.g.,* HCI), preferably, an alkali hydroxide (*e.g.,* sodium hydroxide or calcium hydroxide) or an alkali metal salt of a carboxylate organic compound (*e.g.,* an alkali metal salt of citrate, such as di-sodium citrate), more preferably, an alkali hydroxide such as sodium hydroxide; pH modulators are preferably a base,
- anti-adhesive (*e.g.,* processing aids type stearate) or composite release agents,
- fire-resistant or fire-retardant agents such as ammonium polyphosphates, and
- an amine compound, preferably selected from the group consisting of urea, methylurea, polyurea, polyvinylamine, melamine, polyethylenimine (PEI), diethanoldiamine, ethanoldiamine, ethanolamine, diethanolamine, hexamine.

Preferably, this at least one additive is a pH modulator as described above, in particular, an alkali hydroxide such as sodium hydroxide.

In certain embodiments, the adhesive composition does not comprise any metal oxide. In particular, the adhesive composition does not comprise a metal oxide chosen from MgO, CaO, ZnO, TiO₂, Fe₂O₃, Al₂O₃, SiO₂, or a mixture thereof.

Preferably, upon curing, the adhesive composition forms a solid binder.

Advantageously, the adhesive composition according to the invention is sprayable.

When the adhesive composition used in the present invention comprises at least one additive as previously defined, the skilled person will know at which step and how the latter is to be introduced depending on its chemical characteristics.

To form the lignocellulosic fibres (preferably wood fibres), a lignocellulosic material (preferably wood material) is defibrated. For defibration, the lignocellulosic material is passed through a defibrator (such as by the Asplund or Mason method).

The step of defibrating the lignocellulosic material (preferably wood material) can comprise a step of steaming the lignocellulosic material before defibration by a thermomechanical process or a pressure release based process.

The step of defibrating the lignocellulosic material (preferably wood material) can comprise:
- steaming the lignocellulosic material in a steaming bin by steam to a temperature comprised between 70°C and 150°C, and preferably between 80°C and 95°C,
- conveying to a pre-heater the steamed lignocellulosic material and squeezing water out of the lignocellulosic material before it enters a pre-heater,
- pre-heating the squeezed lignocellulosic material in the pre-heater to a temperature depending on the lignocellulosic material and adapted to soften the lignocellulosic material fibres to ease their separation,
- processing the pre-heated lignocellulosic material in a refiner, thereby obtaining the fibrous mix.

Alternatively, the step of defibrating the lignocellulosic material can comprise:
- placing the lignocellulosic material into a chamber;
- steaming the lignocellulosic material;
- increasing the pressure inside the chamber to a high pressure; and
- releasing the lignocellulosic material through an orifice of the chamber to atmospheric pressure.

In the step of providing a lignocellulosic material, the lignocellulosic material may be in a discrete form, such as chips.

The lignocellulosic material may be for example wood, corn stover, coconut husk, cotton stalk, flax, grass, hemp, kenaf, wheat straw, bagasse, oil palm trunks, bamboo, or a mix of two or more thereof, Preferably, the lignocellulosic material is a wood material. When the lignocellulosic material comprises wood, said wood may comprise at least one of pine wood, spruce wood, birch wood, and beech wood.

In addition, the invention relates to a lignocellulosic fibre-based composite comprising the adhesive composition as previously defined and lignocellulosic fibres.

Preferably, the lignocellulosic fibre-based composite is a wood fibre-based composite.

Preferably, the lignocellulosic fibre-based composite is a fibreboard, more preferably chosen from the group consisting of medium-density fibreboard (MDF, having a density comprised between 650 kg/m³ and 800 kg/m³), and other types of fibreboards such as high density fibreboard (HDF, having a density greater than 800 kg/m³), low (light) density fibreboard (LDF, having a density comprised between 550 kg/m³ and 650 kg/m³) and ultra-low (-light) density fibreboard (ULDF, having a density of less than 550 kg/m³), most preferably medium-density fibreboard.

Preferably, the wood is recycled wood (*i.e.,* a mixture of wood from different sources), oak or coniferous wood such as pine wood and/or spruce wood.

The invention further relates to a process for manufacturing the lignocellulosic fibre-based composite according to the invention, preferably wood fibre-based composite, comprising a step of contacting (resinating) the adhesive composition as previously defined with lignocellulosic fibres to provide lignocellulosic fibres impregnated with this adhesive composition.

The present invention thus relates to a process for the manufacture of a lignocellulosic fibre-based composite, preferably wood fibre-based composite, the process comprising the steps of:
- obtaining lignocellulosic (preferably wood) fibres,
- contacting (resinating) the lignocellulosic fibres with the adhesive composition of the invention to provide lignocellulosic fibres impregnated with the adhesive composition, and
- pressing and/or curing the lignocellulosic fibres impregnated with the adhesive composition, thereby forming the lignocellulosic fibre-based composite.

By "contacting" the adhesive composition with lignocellulosic fibres, it is meant preferably applying by brush or roller, mixing or spraying, more preferably, applying by spraying. Indeed, the viscosity of the adhesive composition is advantageously sufficiently low to allow the spraying of the composition.

Preferably, the step of contacting (resinating) the lignocellulosic fibres with the adhesive composition of the invention can comprise blending the lignocellulosic fibres in a blow line with the adhesive composition.

The step of curing can comprise the steps of:
- drying the lignocellulosic fibres impregnated with the adhesive composition to a moisture content comprised between 0% and 20%, and preferably between 5% and 10%, forming the dried lignocellulosic fibres impregnated with the adhesive composition into a mat,
- pressing the mat to obtain the lignocellulosic fibre-based composite.

Advantageously, the process for manufacturing the lignocellulosic fibre-based composite further comprises a pressing step of the lignocellulosic fibres impregnated with the adhesive composition. Preferably, the pressing time is comprised between 4 s/mm and 50 s/mm, more preferably, between 6 s/mm and 30 s/mm, even more preferably, between 8 s/mm and 15 s/mm, the pressing time being expressed in seconds per thickness of the lignocellulosic material in millimeters.

Advantageously, the process for manufacturing the lignocellulosic fibre-based composite further comprises a step of curing the adhesive composition. Preferably, the curing is implemented by heating at a curing temperature comprised between 60°C and 250°C, more preferably, between 80°C and 230°C, even more preferably, between 160°C and 210°C.

Preferably, the process for manufacturing the lignocellulosic fibre-based composite further comprises both the curing and pressing steps described before.

More preferably, the curing and pressing steps are performed simultaneously.

Even more preferably, the lignocellulosic fibre-based composite is provided after placing the lignocellulosic fibres impregnated with the adhesive composition into a mold, followed by pressing and heating at the curing temperature described before.

The process for the manufacture of a lignocellulosic fibre-based composite can further comprises the steps of cooling and sawing the lignocellulosic fibre-based composite which has been cured.

The invention also relates to a lignocellulosic fibre-based composite, preferably a wood fibre-based composite, obtainable or obtained by such a process.

### Brief Description of the Drawing

The invention will be better understood in the light of the following examples, given by way of illustration, with reference to:
- Figure 1 that is a diagram illustrating the viscosity of dispersions prepared from water and micronized plant seed resources (ground pea seed, referred to as "PF" [pea flour]; sunflower meal, "SM"; heat treated sunflower meal, "HT-SM"; soy flour, "SF1" and rapeseed meal, "RM"), depending on the dry content of the dispersions;
- Figure 2 that shows picture of pea seeds (A) and sunflower seeds (B) after grinding,
- Figure 3 that shows the mechanical properties of MDF boards glued with PF-based adhesive formulation from Adhesive 12 according to the manufacturing process of the invention.

### Example 1: Materials and methods

### Materials

Whole yellow pea seeds (*Pisum sativum*), hexane-extracted sunflower meal, hexane-extracted rapeseed meal and hexane-extracted soybean meal were purchased from Sanders (France) and ground in order to respectively obtain
- micronized pea flour (PF) with a diameter of Dv10 of 7 µm, Dv50 of 25 µm, and Dv90 of 77 µm;
- micronized sunflower meal (SM) with a diameter of Dv10 of 5 µm, Dv50 of 30 µm, and Dv90 of 427 µm;
- micronized rapeseed meal (RM) with a diameter of Dv10 of 5 µm, Dv50 of 31 µm, and Dv90 of 121 µm and
- micronized soy flour (SF2) with a diameter of Dv10 of 15 µm, Dv50 of 43 µm, and Dv90 of 115 µm.

A laboratory grinder from Retsch model ZM 200 was used for grinding. This equipment allows to get well-defined granulometry profile characterized by the Dv50 value (size in microns that splits the distribution with half above and half below this diameter, in volume; in other words, Dv50 is the median particle size by volume).

A ring sieve with 80 µm openings and mill speed of 18000 rpm were the conditions used to obtain the target particle size distribution d50 of about 30 µm.

The heat-treated sunflower meal (HT-SM) was prepared from SM which was heat treated at 150°C during 30 min in dry conditions.

Another grade of soy flour (from hexane extracted soy beans) was also investigated. The soy flour SF1 already micronized was the commercially available soy flour grade 7B purchased from ADM and used as received. The particle size was evaluated and found to have a diameter of Dv10 of 5 µm, Dv50 of 25 µm, and Dv90 of 127 µm.

The micronized pea seed, sunflower seed meal, rapeseed meal and soy flours have a starch content of 51.7% wt/wt, 3.9% wt/wt, 6.3% wt/wt and 5.7% wt/wt, respectively. Starch content was measured after amylolysis and by HPAEC analyses. Glucose released from starch (after amylolysis) was quantified in HPAEC-PAD (ICS-3000, Thermo Scientific Dionex) using a CarboPac PA1 column (2 mm × 250 mm, Thermo Scientific, USA), thermostated at 25°C. An isocratic elution of 500 mM of NaOH was used at a flow rate 0.25 mL.min⁻¹. Rhamnose was used as an internal standard for calibration

Total crude proteins content of PF (pea flour), SM (sunflower seed meal), RM (rapeseed meal), SF1 and SF2 (soy flours 1 and 2) obtained using Kjeldahl procedure (NF EN ISO 5983-2 : 2009) with a nitrogen-to-protein conversion factor of 6.25 was 19.0% ± 1.6% wt/wt, 37.0% ± 2.3% wt/wt, 34.0% wt/wt ± 1.9% wt/wt, 51.2% ± 2.0% wt/wt and 48.0% ± 1.4% wt/wt, respectively.

The total oil content of PF, SM, RM, SF1 and SF2 was respectively 1.2% wt/wt; 1.2% wt/wt; 1.4% wt/w; 0.74% wt/wt and 2.0% wt/wt. The oil contents were measured as follows: oil was extracted with a Soxhlet extractor using n-hexane as solvent. Thereafter, the hexane was separated from oil by using a rotary evaporator at 68°C.

The moisture content of PF, SM, RM, SF1 and SF2 was respectively 7.7% wt/wt, 6.0% wt/wt, 5.0% wt/wt, 4.5% wt/wt and 6.3% wt/wt. The moisture contents were determined by placing about 1.5 g of material in an aluminum cup, the exact weight being measured with an analytical balance with 4 digits after the decimal point. Then the cup is placed in a fan ventilated oven at 105°C for 3h. Fan & valve aperture are set at 100% to accelerate water evaporation. The cup is weighted immediately after being removed from the oven or after conditioning in a desiccator to get sample at room temperature. Moisture content is obtained by calculating the percentage of material loss of the cup before being placed in the oven and after being placed in the oven.

Crude vegetable glycerin with a glycerol content of about 85% wt/wt was provided by Oleon (France) and used as a diluent.

The polyamidoamine-epichlorohydrin (PAE) resin Marenyl WPD 20 was from Mare SpA (Milan, Italia) and used as received. The PAE resin is an aqueous solution with a polymer solids content of 20% wt/wt. Wood fibres used to prepare MDF boards were obtained at the industrial scale.

### Product characterization

### Particle size determination

The particle size of ground samples is measured using a Malvern laser granulometer Mastersizer 3000. Sample material is injected through the dry injection tool of the analyzer. Refractive index and model used are respectively 1.52 and Mie to determine the particle size density profile.

### Rheological analysis

The rheological properties of adhesive formulations were determined by using a Hakke Rheometer (MARSIII, Thermo, Germany). The prepared adhesive samples were placed between parallel plates, and then the shear stress and apparent viscosity under shear rate of 10 s⁻¹ were tested at 20°C.

Rheological analysis was performed on dispersions prepared from PF, SM, RM, HT-SM, SF1 (see Example 2). Typically, different amounts of micronized plant based raw materials (from 10% wt/wt to 45% wt/wt of solid) were dispersed into water at ambient temperature. After 10min of homogenization, the viscosity was recorded.

To highlight the rheological properties depending on the plant-based source, rheological analysis was also performed on different adhesives compositions (see Example 3).

### Panel boards characterization

The MDF boards are cut to get samples for water resistance determined by Thickness Swelling after 24h in water bath (TS) and Internal Bonding (IB) test. Water resistance and IB are done respectively following standard ISO EN 317:1993 and ISO EN 319:1993. Apparatus used for all these measurements is the Imal (Italia), IBX700 model. The test results are mean values with their standard deviation.

To determine the internal bond strength and the thickness swell, six test specimens with nominal dimensions of 50.0 mm × 50.0 mm × 11.5 mm were cut from test panels for each condition. The IB was calculated and recorded after each specimen was tested to failure. The TS that is defined as the percentage increase in the thickness of a specimen after immersing in water for 24h at room temperature were measured, before and immediately after the 24h soaking process.

To determine the internal bond strength, six test specimens with nominal dimensions of 50.0 mm × 50.0 mm × 11.5 mm were cut from test panels for each condition. The IB was calculated and recorded after each specimen was tested to failure.

### Example 2: Viscosity of micronized plant seed resource based dispersions depending on their solid content

An adhesive composition is aimed to have a high solid content to avoid issues during pressing time at high temperature and high pressure (to prevent the blowout due to an excess of water); but limitation of water to prepare the adhesive composition can lead to a too viscous adhesive resulting in an issue during the process of injection into the wood fibres. Consequently, choosing an appropriate raw material is very important to overcome both issues.

Dispersions were prepared by mixing micronized plant seed resources (pea flour, PF; sunflower meal, SM; heat treated sunflower meal, HT-SM; soy flour, SF1 and rapeseed meal, RM) into water.

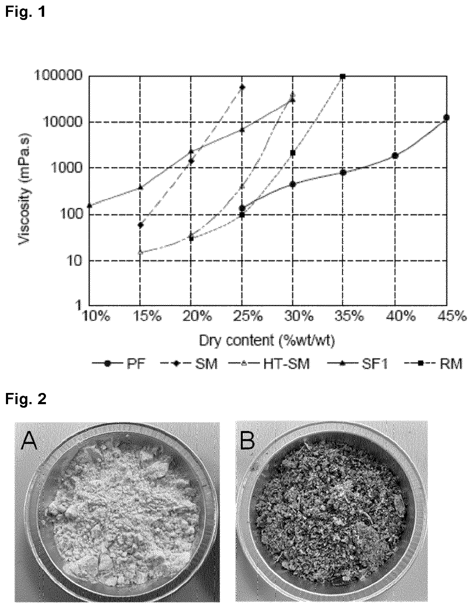

The viscosity of the dispersions was evaluated according to the solid content of the raw materials into water and the results were compared (Figure 1).

Dispersions prepared from raw materials such as soy flour SF1 and sunflower meal SM exhibited the highest viscosity. Their viscosity increased dramatically when the solid content was higher than 20% wt/wt of solid matter into water reaching to very thick dispersions (above 10000 mPa.s).

The viscosity of the heat treated sunflower meal (HT-SM) and of the rapeseed meal (RM) dispersions were better than that of SF1 and SM but increased dramatically for solid contents above 25%.

However, when PF was used, the viscosity was low (inferior to or around 1000 mPa.s) even at solid content equal to 35% wt/wt.

### Example 3: Viscosity of different adhesive solutions based on SF2 or PF

### Adhesive preparation steps

### Formulations of a 1^{st} set of adhesive compositions (based on SF2)

11.25 g of PAE solution were first blend with 23 g of water. 15.75 g of SF2 were then added and then the whole solution was mixed until obtaining a homogeneous mixture. No NaOH was added and the pH was recorded as 3.5 (Adhesive 1 and Adhesive 3) or the solutions were adjusted at 7 with a 10M NaOH solution (Adhesive 2 and Adhesive 4). For the Adhesive 3 and Adhesive 4, 5% wt/wt of NaCl and 5% wt/wt of NaHSO₃ were dissolved into the PAE and water solution, before SF2 addition, based on the teaching of International application WO2010028062A1. The total solid amount of the four adhesive formulations was calculated to be 36% wt/wt.

### Formulations of a 2^{nd} set of adhesive compositions (based on PF)

11.25 g of PAE solution were first blend with 23 g of water. 15.75 g of PF were then added and then the whole solution was mixed until obtaining a homogeneous mixture. No NaOH was added and the pH was recorded as 3.5 (Adhesive 5 and Adhesive 7) or the solutions were adjusted at 7 with a 10M NaOH solution (Adhesive 6 and Adhesive 8). For Adhesive 7 and Adhesive 8, 5% wt/wt of NaCl and 5% wt/wt of NaHSO₃ were dissolved into the PAE and water solution, before PF addition, based on the teaching of International application WO2010028062A1. The total solid amount of the four adhesive formulations was calculated to be 36% wt/wt.

### Formulations of a 3^{rd} set of adhesive compositions

54 g of PAE were first blend with 22 g of glycerin until obtaining a homogeneous solution. 23.5 g of a protein-based raw material were then added to the blend and then whole solution was mixed until obtaining an homogeneous mixtures. Adhesive 9 and Adhesive 10 were prepared with SF2 and Adhesive 11 and Adhesive 12 were prepared with PF. For Adhesive 9 and Adhesive 11, no NaOH solution was added and the pH was recorded as 3.5. For Adhesive 10 and Adhesive 12, the solutions were adjusted at pH 8 with a 10M NaOH solution. The total solid amount of the four adhesive solutions was calculated to be 56.4% wt/wt.

The composition of the adhesive solutions from Adhesive 1 to Adhesive 12 are summarized in the Table 1 below.

**Table 1 : Protein-based raw material composition and pH of biobased adhesives based on PAE**

| Adhesives | Protein-based raw material | pH | Viscosity-modifying additive (NaCl and NaHSO₃) | Glycerol | Solid content (% wt/wt) |
|---|---|---|---|---|---|
| Adhesive 1 | SF2 | 3.5 | No | No | 36.0 |
| Adhesive 2 | SF2 | 7.0 | No | No | 36.0 |
| Adhesive 3 | SF2 | 3.5 | Yes | No | 36.0 |
| Adhesive 4 | SF2 | 7.0 | Yes | No | 36.0 |
| Adhesive 5 | PF | 3.5 | No | No | 36.0 |
| Adhesive 6 | PF | 7.0 | No | No | 36.0 |
| Adhesive 7 | PF | 3.5 | Yes | No | 36.0 |
| Adhesive 8 | PF | 7.0 | Yes | No | 36.0 |
| Adhesive 9 | SF2 | 3.5 | No | Yes | 56.4 |
| Adhesive 10 | SF2 | 8.0 | No | Yes | 56.4 |
| Adhesive 11 | PF | 3.5 | No | Yes | 56.4 |
| Adhesive 12 | PF | 8.0 | No | Yes | 56.4 |

### Comparison of the viscosity of the adhesive solutions based of SF1 and PF

**Table 2 : Rheological properties of adhesives based on PAE**

| **Adhesives** | **Viscosity (mPa.s)** |
|---|---|
| Adhesive 1 | 8234 |
| Adhesive 2 | 9207 |
| Adhesive 3 | 2313 |
| Adhesive 4 | 3604 |
| Adhesive 5 | 358 |
| Adhesive 6 | 377 |
| Adhesive 7 | 340 |
| Adhesive 8 | 702 |
| Adhesive 9 | 3600 |
| Adhesive 10 | 4850 |
| Adhesive 11 | 455 |
| Adhesive 12 | 870 |

SF-based adhesives formulation from Adhesive 1 and Adhesive 2 with solid content of 36% wt/wt exhibited very high viscosity (9234 mPa.s at pH 3.5 and 9207 mPa.s at pH 7).

One of the solutions to lower the viscosity consists in using viscosity-modifying additives NaHSO₃ blend with NaCl. Indeed, as shown in Table 2, these additives were able to reduce the viscosity of the SF2-based adhesive formulations (Adhesive 3 and Adhesive 4). However, the viscosity of these formulations were still very high (2313 mPa.s at pH 3.5 and 3604 mPa.s at pH 7) and were not compatible for an industrial used since the limiting viscosity to be injected throughout nozzles was founded to be 1000 mPa.s. Increasing water amount to prepare SF adhesive formulation however could lead to an excess of water after resination.

In contrast, adhesive solutions based on PF (Adhesive 5 and Adhesive 6) did not require addition of viscosity-modifying additives since the viscosity were very low. At same solid content of 36% wt/wt, the viscosity of formulations based on PF was respectively 358 mPa.s at pH 3.5 and 377 mPa.s at pH 7.

Another way to decrease the viscosity of an adhesive formulation consisted in using glycerol as diluent. However, the adhesive formulation based on SF2 and glycerol still had a too high viscosity of 4850 mPa.s (Adhesive 10) while that of PF-based adhesive formulation was 870 mPa.s (Adhesive 12).

Consequently, only the PF is a valuable raw material to prepare processable formulation compatible with an industrial use.

### Example 4: Comparison of physicochemical properties of pea flour with others native seeds

Yellow peas used in these examples are whole seeds that have not undergone pretreatment or other process of preparation (such as seed crushing) contrary to others vegetable raw materials usually selected to prepare biobased adhesive compositions. To confirm the interest of pea flour *versus* oilseeds, additional analysis was conducted on sunflower seeds. Their physicochemical properties were characterized and compared to pea flour.

To evaluate the properties of sunflower seeds, the first step consisted in micronization to obtain a particle size Dv10 of 206 µm, Dv50 of 387 µm and Dv90 of 654 µm. However, the grinding of sunflower seeds was not possible due to an excess of oil amount (41.6% wt/wt) which clogged the grinder. Only agglomerates were obtained with sunflower seeds (Figure 2B) instead of a homogeneous powder such as the powder obtained after grinding pea seeds (Figure 2A). Due to this limitation, sunflower seeds cannot be used to produce a liquid adhesive formulation.

### Example 5: Preparation of fibreboards

The whole liquid adhesive solution according to Adhesive 12 (biobased adhesive based on PF) from Example 3 was first injected using a spray nozzle onto wood fibres into a blender (Imal, Lab Glue Blender 300). The mixing step was carried out for 5 minutes.

Finally, the impregnated wood fibres were weighted to achieve a density of boards approximately of 750 kg/m³. Forming box size was 200 mm X 200 mm X 120 mm to make the mat. After wood/adhesive sample addition, the mat was cold pressed by hand. The mat was then placed into a heating press from CARVER (platen of 250X250 mm) and pressed to a thickness of 12 mm and cured at 210°C. 3 panels were made at different press times: 10, 12 and 15s/mm (*i.e*. 120, 144 and 180s). After pressing, thickness and weight of the MDF boards were measured and recorded. Then the boards were placed in a conditioning room at 20°C and 65% r.h. for at least three days before further experiments

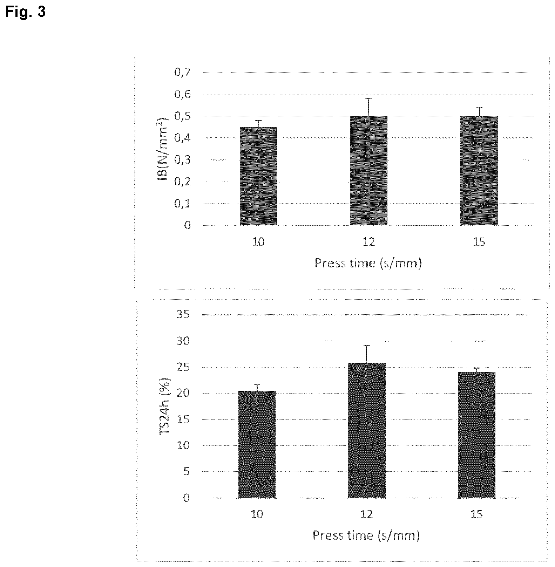

The mechanical properties of the boards were evaluated at different press factors (Figure 3). The internal bond of boards were respectively 0.45 N/mm², 0.50 N/mm² and 0.50 N/mm² at pressing times of 10, 12 and 15 s/mm and the thickness swelling results were 20.4%, 25.8% and 24.1%. These results show the good adhesive performances of the biobased adhesive based on PF and showed the very fast curing time of these adhesive formulation.

### Conclusion

Based on these results, it can be concluded that pea flour (i.e., ground pea seed) was the most interesting raw material as it exhibited good adhesive properties, low viscosity allowing its processability and many other advantages comparing to soy flour or others plant meals in particular it does not require processing before being used such as crushing to extract the vegetable oil.

## Claims

1. Use of an adhesive composition comprising:
- ground pea seeds comprising between 5 wt% and 40 wt% of crude proteins on the total weight of the ground pea seeds,
- an amine-based azetidinium-functional cross-linker, and
- water,
said adhesive composition having a viscosity at 20°C of less than 1200 mPa.s,
for bonding lignocellulosic fibres.

2. Use according to claim 1 for manufacturing a lignocellulosic fibre-based composite.

3. Use according to claim 1 or claim 2, wherein the ground pea seeds belong to the genus *Pisum* and/or *Lathyrus.*

4. Use according to any one of claims 1 to 3, wherein the pH of the adhesive composition is more than 6.

5. Use according to any one of claims 1 to 4, wherein the amine-based azetidinium-functional cross-linker is polyamidoamine-epichlorohydrin (PAE), polyalkylenepolyamine-epichlorohydrin (PAPAE), amine polymer-epichlorohydrin (APE), or a combination thereof, preferably PAE.

6. Use according to any one of claims 1 to 5, wherein the adhesive composition comprises between 5 wt% and 60 wt% of the ground pea seeds, based on the total weight of the adhesive composition.

7. Use according to any one of claims 1 to 6, wherein the adhesive composition comprises between 2 wt% and 12 wt% of the amine-based azetidinium-functional cross-linker, based on the total weight of the adhesive composition.

8. Use according to any one of claims 1 to 7, wherein the adhesive composition has a solid content of at least 20 wt%, based on the total weight of the adhesive composition.

9. Use according to any one of claims 1 to 8, wherein the adhesive composition further comprises a polyol, preferably a trifunctional alcohol.

10. Use according to claim 9, wherein the polyol is glycerol or crude vegetable glycerin.

11. Use according to any one of claims 1 to 10, wherein the adhesive composition further comprises at least one additive.

12. A lignocellulosic fibre-based composite comprising the adhesive composition as defined in any one of claims 1 to 11 and lignocellulosic fibres.

13. Process for manufacturing a lignocellulosic fibre-based composite, comprising a step of contacting the adhesive composition as defined in any one of claims 1 to 11 with lignocellulosic fibres to provide lignocellulosic fibres impregnated with the adhesive composition.

14. Process for the manufacture of a lignocellulosic fibre-based composite according to claim 13 comprising the steps of:
- obtaining lignocellulosic fibres,
- contacting the lignocellulosic fibres with the adhesive composition of the invention to provide lignocellulosic fibres impregnated with the adhesive composition as defined in any one of claims 1 to 11, and
- pressing and/or curing the lignocellulosic fibres impregnated with the adhesive composition, thereby forming the lignocellulosic fibre-based composite.

15. A lignocellulosic fibre-based composite obtainable by the process of claim 13 or 14.
